# EUROPÄISCHE PATENTSCHRIFT

(11) **EP 2 860 356 B1**
(45) Veröffentlichungstag und Bekanntmachung des Hinweises auf die Patenterteilung: **01.03.2017**
(21) Anmeldenummer: 14185279.8
(22) Anmeldetag: 18.09.2014
(51) Int. Cl.: F01D 11/02, F01D 11/08

(54) **Strömungsmaschine**
Flow engine
Turbomachine

(30) Priorität: 08.10.2013 DE 102013220276
(43) Veröffentlichungstag der Anmeldung: 15.04.2015
(73) Patentinhaber: MTU Aero Engines AG, 80995 München (DE)
(72) Erfinder: Ramm, Günter, 82223 Eichenau (DE)

(56) Entgegenhaltungen:
- DE-A1- 10 330 084
- DE-A1-102007 054 926
- US-A- 3 730 640

## Beschreibung

Die Erfindung betrifft eine Strömungsmaschine mit einer Ringraumabdichtung nach dem Oberbegriff des Patentanspruchs 1.

Strömungsmaschinen, wie stationäre Gasturbinen oder Flugzeugtriebwerke, sind herkömmlicherweise zwischen benachbarten Leitschaufelreihen und Laufschaufelreihen mit Ringraumdichtungen zum zumindest Reduzieren eines Fluidaustausches zwischen einem von einem Hauptstrom durchströmten Ringraums und zum Ringraum radial innen- und außenliegenden Kavitäten versehen. Eine derartige Ringraumabdichtung ist beispielsweise in der US 3,730,640 A gezeigt. Diese bekannte Ringraumabdichtung hat eine Vielzahl von geschlitzten Federblechen, die sich von einem Rotorsteg in Axialrichtung der Strömungsmaschine stromabwärts einer Laufschaufelreihe erstrecken und dabei eine radial innere Kavität zum Ringraum hin überdecken. Nachteilig an dieser Ringraumabdichtung ist, dass diese rotorseitig angeordnet ist, wodurch sie zur Gewichtserhöhung des Rotors beiträgt und sich auf das Laufverhalten des Rotors auswirkt.

Aufgabe der Erfindung ist es, eine Strömungsmaschine mit einer alternativen Ringraumabdichtung zu schaffen, die die vorgenannten Nachteile beseitigt.

Diese Aufgabe wird gelöst durch eine Strömungsmaschine mit den Merkmalen des Patentanspruchs 1.

Eine erfindungsgemäße Strömungsmaschine, insbesondere ein Flugtriebwerk, hat eine Ringraumabdichtung zum zumindest Reduzieren eines Fluidaustausches zwischen einem von einem Hauptstrom durchströmten Ringraums und zumindest einer zum Ringraum radial innen- und/oder radial außenliegenden Kavität. Die Ringraumabdichtung hat eine Vielzahl von plattenartigen Federelementen, die sich erfindungsgemäß in Axialrichtung der Strömungsmaschine über Deckbandkanten der Leitschaufelreihe, an welcher sie angeordnet sind, erstrecken, wobei sie in Radialrichtung der Strömungsmaschine und an ihrem jeweiligen Orten in Strömungsrichtung des die jeweilige Leitschaufelreihe durchströmten Hauptstroms orientiert sind, so dass sie in Axialrichtung der Strömungsmaschine eine angestellte Orientierung aufweisen.

Durch die Anordnung der Federelemente an zumindest einer Leitschaufelreihe ist sie statorseitig befestigt und trägt mit ihrem Eigengewicht nicht zum Rotorgewicht bei. Die Ringraumabdichtung führt zu keiner Zunahme des Rotorgewichts und muss auch beim Laufverhalten des Rotors nicht berücksichtigt werden. Durch die Orientierung der Federelemente in Radialrichtung und in Strömungsrichtung wird zum einen eine hohe Überdeckung der zumindest einen Kavität erreicht. Zudem wird dadurch, dass die Federelemente an ihren jeweiligen Orten in Richtung des Hautstroms bzw. der Hauptströmung ausgerichtet sind, eine Störung der Hauptströmung verhindert oder zumindest minimiert. Durch die verbesserte Überdeckung erfolgt ein Wirkungsgradgewinn, was zu einem geringeren Brennstoff- bzw. Treibstoffverbrauch führt. Zum anderen kann die zumindest eine Ringraumabdichtung durch die in Axialrichtung angestellte Orientierung ihrer Federelemente als Schutzeinrichtung bei einer axialen Relativverschiebung des Rotors zum Stator wirken. Wenn nämlich beispielsweise in Folge eines Pumpstoßes der Rotor relativ zum Stator um einen bestimmten Betrag verschoben wird, können ab einer bestimmten Axialverschiebung die den Federelementen gegenüberliegenden Laufschaufeln auf die Federelemente auflaufen. Die Federelemente werden elastisch verformt und die Laufschaufeln blieben unbeschädigt. Da beim Auflaufen keine Beschädigungen auftreten, können die Federelemente weiter über die Kavität geführt werden als herkömmliche Ringraumabdichtungen, wodurch die Überdeckung der jeweiligen Kavität weiter verbessert wird. Bei einer Rückverschiebung des Rotors in seine axiale Ausgangslage nehmen die Federelemente wieder ihre ursprüngliche Form an. Die erfindungsgemäße Ringraumdichtung verfügt somit über eine Doppelfunktion: erstens Dichtfunktion und zweitens Schutzfunktion.

Um eine gleichmäßige Umlenkung des Hauptstroms im Deckbandbereich sowie um eine gleichmäßige Abdeckung der zumindest einen Kavität zu erreichen, ist es vorteilhaft, wenn die Federelemente in Umfangsrichtung der Strömungsmaschine betrachtet über die Leitschaufelreihe gleichmäßig voneinander beabstandet sind.

Um eine störende Verwirbelung der deckbandseitigen Hauptströmung beim Abströmen zu verhindern, ist es vorteilhaft, wenn die Federelemente in Radialrichtung bündig mit jeweils einer den Ringraum radial begrenzenden Deckbandinnenseite abschließen.

Zur Vermeidung einer störenden Verwirbelung von Sperrluft in der Kavität können die Federelemente in Radialrichtung betrachtet bündig mit jeweils einer die Kavität begrenzenden Deckbandaußenseite abschließen.

Bei einer technisch einfach zu realisierenden Befestigung sind die Federelemente mit jeweils einem Halteabschnitt in eine korrespondierende Vertiefung der Deckbänder eingesetzt. Zur Sicherung der Federelemente an den Deckbändern können sie in den Vertiefungen stoffschlüssig beispielsweise durch Verlöten, Verkleben, Verschweißen und dergleichen gegen Herausfallen gesichert werden.

Bei einem Ausführungsbeispiel schließen die Federelemente mit ihren Wirkabschnitten spaltlos mit den Deckbändern ab. Die spaltlose Anordnung ermöglicht eine einfache Montage.

Bei einem alternativen Ausführungsbeispiel sind die Federelemente mit ihren Wirkabschnitten über jeweils einen Spalt von den Deckbändern beabstandet. Der Spalt ermöglicht eine größere Überdeckung, da sich die Federelemente in Umfangsrichtung stärker verbiegen können.

Bevorzugterweise ist jeweils eine Ringraumabdichtung an vorderen Deckbandkanten und hinteren Deckbandkanten einer Leitschaufelreihe angeordnet. Hierdurch erfolgt eine optimale Abdichtung einer Kavität in Strömungsrichtung des Hauptstroms vor und hinter der jeweiligen Leitschaufelreihe. Gleichzeitig können hierdurch axiale Relativverschiebungen des Rotors in Strömungsrichtung und in Gegenrichtung durch die Ringraumabdichtung bzw. deren Federelemente "abgefedert werden".

Um Beschädigung an den Federelementen gegenüberliegenden Laufschaufeln einer Laufschaufelreihe zuverlässig zu verhindern, ist es vorteilhaft, wenn die Laufschaufeln Anstreifbereiche zum Anstreifen der Federelemente haben. Diese befinden sich bei einem Ausführungsbeispiel in einem Übergangsbereich zwischen einer Innenplattform und einem Schaufelblatt der jeweiligen Laufschaufel. Die Anstreifbereiche können zudem gesondert behandelt, beispielsweise oberflächengehärtet, sein.

Wenn die Ringraumabdichtung ebenfalls außendeckbandseitig an den Leitschaufeln angeordnet ist, ist es zur zuverlässigen Vermeidung von Beschädigungen der jeweils gegenüberliegenden Laufschaufeln vorteilhaft, wenn diese zum Anstreifen der Federelemente Anstreifbereiche haben, die jeweils als radiale stegartige Vorsprünge einer Außenplattformkante ausgebildet sind.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand stark vereinfachten schematischen Zeichnungen näher erläutert. Es zeigen:
- Figur 1: einen Längsschnitt durch einen Bereich eines Ausführungsbeispiels einer erfindungsgemäßen Strömungsmaschine mit montierten Ringraumabdichtungen,
- Figur 2: eine Draufsicht auf die radial innenliegenden Ringraumabdichtungen aus Figur 1, und
- Figur 3: eine Detaildarstellung eines Federelements der Ringraumabdichtung aus Figur 1,
- Figur 4: eine Detaildarstellung einer alternativen Anordnung eines Federelements der Ringraumabdichtung aus Figur 1, und
- Figur 5: einen Längsschnitt durch einen Bereich eines alternativen Ausführungsbeispiels einer erfindungsgemäßen Strömungsmaschine mit montierten Ringraumabdichtungen.

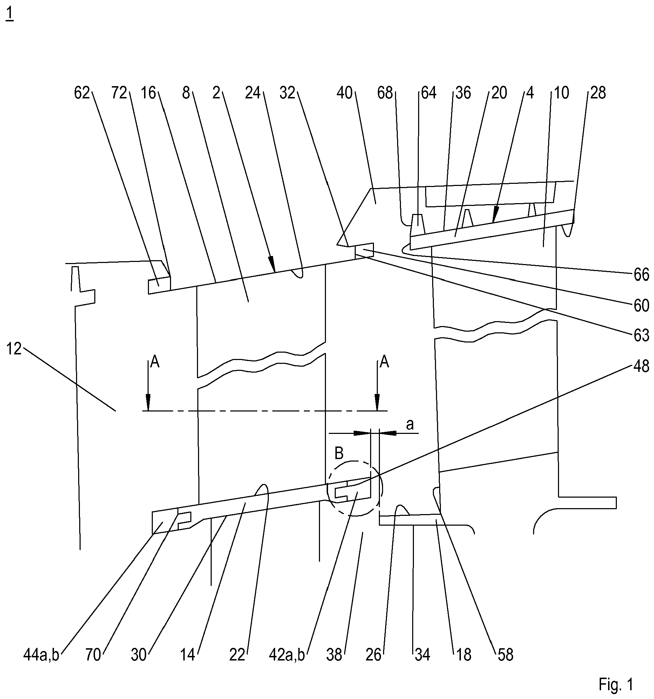

In Figur 1 ist ein Längsschnitt durch einen Bereich eines Ausführungsbeispiels einer erfindungsgemäßen Strömungsmaschine 1 gezeigt. Die Strömungsmaschine 1 ist beispielsweise eine Gasturbine und insbesondere ein Flugtriebwerk. Die Strömungsmaschine 1 hat einen Stator, der eine Vielzahl von in Axialrichtung der Strömungsmaschine 1 hintereinander angeordneten Leitschaufelreihen 2 aufweist. In dem Stator ist ein um ein Axialachse der Strömungsmaschine rotierbarer Rotor gelagert, der in Axialrichtung betrachtet eine Vielzahl von abwechselnd mit den Leitschaufelreihen 2 angeordneten Laufschaufelreihen 4 hat. Die Schaufelreihen 2, 4 bestehen jeweils aus einer Vielzahl von in Umfangsrichtung der Strömungsmaschine nebeneinander angeordneten Schaufeln, die jeweils ein Schaufelblatt 8, 10 aufweisen. Die Schaufelblätter 8, 10 sind jeweils in einem Ringraum 12 angeordnet, der sich etwa in Axialrichtung erstreckt und von einem Hauptstrom durchströmt wird. In dem hier gezeigten Ausführungsbeispiel wird der Ringraum 12 von dem Hauptstrom von links nach rechts durchströmt.

Der Ringraum 12 ist in Radialrichtung von Innendeckbändern 14 und Außendeckbändern 16 der Leitschaufeln und von Innenplattformen 18 und Außenplattformen 20 der Laufschaufeln begrenzt. Insbesondere wird der Ringraum 12 von Deckbandinnenflächen 22, 24 und von Plattforminnenflächen 26, 28 begrenzt.

Von den Innenflächen 22, 24, 26, 28 abgewandte Deckbandaußenflächen 30, 32 sowie Plattformaußenflächen 34, 36 begrenzen in dem hier gezeigten Ausführungsbeispiel eine zum Ringraum 12 radial innenliegende Innenkavität 38 und eine zum Ringraum 12 radial außenliegende Außenkavität 40.

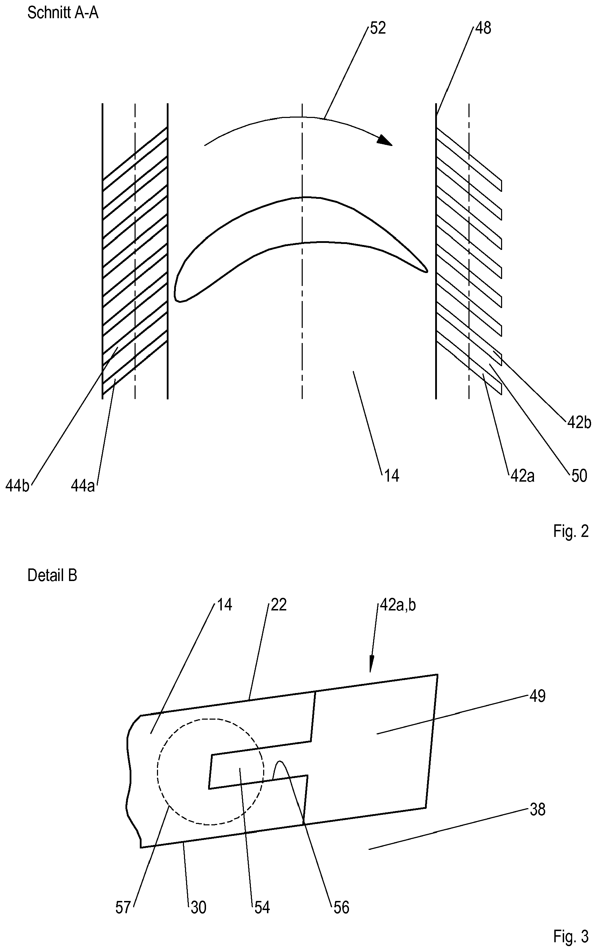

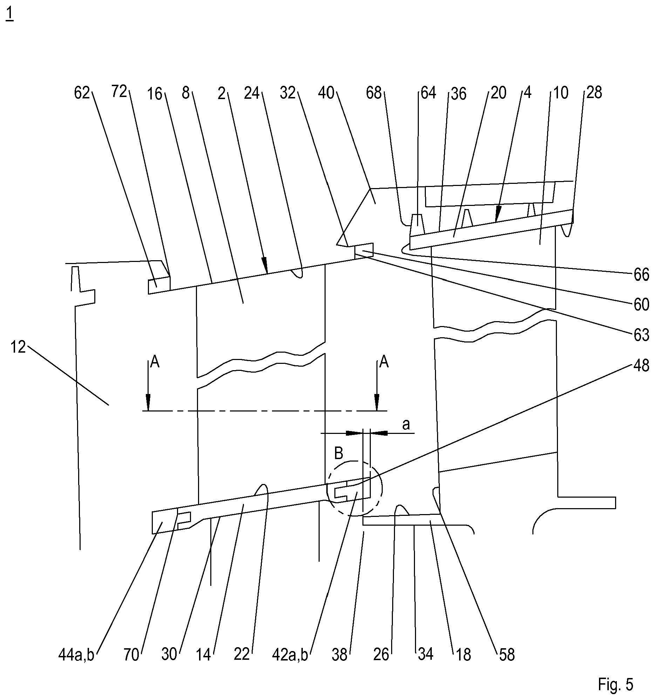

Um einen Fluidaustausch zwischen dem Hauptstrom im Ringraum 12 und einem Kühlmittelstrom beispielsweise in der Innenkavität 38 zu verhindern bzw. zumindest zu reduzieren, weist die Strömungsmaschine 1, wie anhand der Leitschaufelreihe 2 und der hinteren bzw. stromabwärtigen Laufschaufelreihe 4 in Figur 1 angedeutet, eine Ringraumabdichtung auf. Die Ringraumabdichtung hat zumindest eine Vielzahl von Federelementen 42a, 42b, die sich in Axialrichtung der Strömungsmaschine über eine hintere Deckbandinnenkante 48 erstrecken. Die Federelemente 42a, 42b sind radial außen zur Innenplattform 18 angeordnet und in dem hier gezeigten Ausführungsbeispiel über einen positiven Axialspalt a von den Innenplattformen 18 beabstandet. Wie in Figur 5 skizziert, kann der Axialspalt a durch eine axiale Überlappung der Innenplattform 18 mit den Federelementen 42a, 42b auch negativ sein.
Wie in der Draufsicht nach Figur 2 gezeigt, haben die Federelemente 42a, 42b eine plattenförmige Gestalt bzw. jeweils einen plattenförmigen Wirkabschnitt 49 und sind in Radialrichtung der Strömungsmaschine bezogen auf das jeweilige Innendeckband 14 aufrecht orientiert. Mit anderen Worten ist in der Ansicht gemäß Figur 2 eine jeweilige Schmalseite der plattformförmigen Federelemente 42a, 42b zu erkennen, wohingegen in den Ansichten nach den Figuren 1 und 3 eine gegenüber der Schmalseite größere Flachseite der Federelemente 42a, 42b zu erkennen ist. Sie sind in Umfangsrichtung der Leitschaufelreihe 2 gleichmäßig voneinander beabstandet, sodass zwischen ihnen bzw. ihren plattenförmigen Wirkabschnitten 49 eine Vielzahl von Kanälen 50 gebildet wird. In Umfangsrichtung betrachtet weist die Leitschaufelreihe 2 quasi einen hinteren Federelementenkranz auf. Aufgrund der aufrechten Orientierung der Federelemente 42a, 42b haben die Kanäle 50 hier eine größere Erstreckung in Umfangsrichtung als die Federelemente 42a, 42b. Selbstverständlich können die Federelemente 42a, 42b auch eine größere Erstreckung in Umfangsrichtung als die Kanäle 50 aufweisen.

Wie zudem in Figur 2 zu erkennen, sind die Federelemente 42a, 42b in Strömungsrichtung des die Leitschaufelreihe 2 durchströmenden Hauptstroms orientiert. Der Hauptstrom ist durch den Pfeil 52 angedeutet und strömt entlang des jeweiligen Innendeckbandes 14 durch die Kanäle 50. Hierbei bildet er einen die Innenkavität 38 überdeckenden Dichtungsschleier bzw. Dichtungsfilm, der quasi eine hintere Verlängerung des Innendeckbandes 14 darstellt. Zudem wird durch die Schrägstellung der Federelemente 42a, 42b in Richtung des Hautstroms bzw. der Hauptströmung eine Störung der Hauptströmung verhindert oder zumindest minimiert.

Wie in Figur 3 gezeigt, haben die Federelemente 42a, 42b zur Befestigung an den Innendeckbändern 14 einen zentralen stielartigen Halteabschnitt 54, der in eine entsprechende Vertiefung 56 der Innendeckbänder 14 eingesetzt ist. Zur Sicherung der Federelemente 42a, 42b in den Vertiefungen 56 können sie zusätzlich stoffschlüssig, beispielsweise mittels Verlötens, Verklebens, Verschweißens und dergleichen an den Innendeckbändern 14 gesichert sein. Ein Befestigungsbereich 57 ist dabei bevorzugterweise endseitig des Halteabschnitts 54 vorgesehen. Mit ihren Wirkabschnitten 49 schließen sie bei diesem Ausführungsbeispiel dabei spaltlos mit den Innendeckbändern 14 ab.

Um eine Verwirbelung der Hauptstromgrenzschicht auf dem Innendeckbändern 14 zu verhindern, schließen die Federelemente 42a, 42b mit ihrem plattenförmigen Wirkabschnitt 49 hier bündig mit den Deckbandinnenflächen 22 ab. Ebenso schließen die Federelemente 42a, 42b bündig mit den, den Innenkavität 38 zugewandten Deckbandaußenflächen 30 ab. Die Federelemente 42a, 42b haben somit eine Erstreckung in Radialrichtung der Strömungsmaschine, die gleich einer Höhe der hinteren Deckbandkante 48 ist.

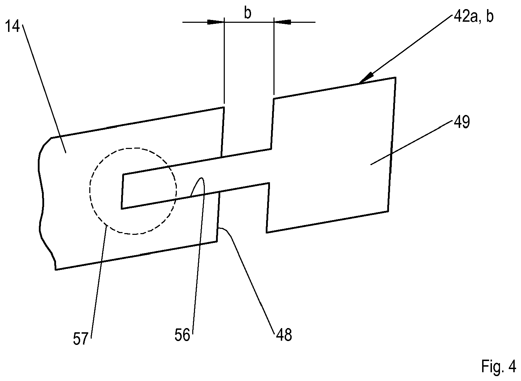

Wie in Figur 4 anhand der Federelemente 42a, 42b skizziert, können sämtliche Federelemente 42a, 42b, 44a, 44b, 60, 62 auch mit ihren plattenförmigen Wirkabschnitten 49 über jeweils einen axialen Spalt b von dem sie jeweils aufnehmenden Deckband 14, 16 beabstandet sein. Ein jeweiliger Befestigungsbereich 57 in den Vertiefungen 56 ist vorzugsweise entsprechend endseitig ihrer stielartigen Halteabschnitt 54 vorgesehen. Der Spalt b ermöglicht eine größere Überdeckung, da sich die Federelemente 42a, 42b in Umfangsrichtung stärker verbiegen können.

Mit Bezug zur Figur 1 erfüllen die Federelemente 42a, 42b zusätzlich zu ihrer Dichtfunktion eine Schutzfunktion bei einer relativen Axialverschiebung des Rotors zum Stator. Denn aufgrund ihrer Federwirkung geben die Federelemente 42a, 42b bei einer Berührung mit Laufschaufelbereichen nach. Hierdurch kann der Axialspalt a zwischen der Leitschaufelreihe 2 und der Laufschaufelreihe 4 minimal ausgeführt werden bzw. die Federelemente 42a, 42b können sich in Axialrichtung grundsätzlich sogar über die Innenplattform 18 erstrecken. Eine derartige Berührung kann beispielsweise bei einem Pumpstoß auftreten, bei dem der Rotor um einen Betrag axial relativ zum Stator verschoben wird. Zum Schutz der in einem solchen Fall auf die Federelemente 42a, 42b auflaufenden Laufschaufelbereiche weisen die Laufschaufeln jeweils einen Anstreifbereich 58 auf. Dieser ist zwischen der Innenplattform 18 und dem Schaufelblatt 10 und somit außerhalb des aerodynamischen Profils der jeweiligen Laufschaufel angeordnet. Der Anstreifbereich 58 kann zusätzlich eine entsprechende Struktur und/oder härtende Oberflächenbehandlung aufweisen.

Wie des Weiteren in Figur 1 zu erkennen, kann die erfindungsgemäße Ringraumabdichtung ebenfalls oder alternativ im Bereich der Außendeckbänder 16 der Leitschaufelreihe 2 angeordnet sein. Die Ringraumabdichtung weist entsprechende hintere plattenförmige Federelemente 60 auf, die gleich den hinteren Federelementen 42a, 42b ausgeführt sind und sich über eine äußere Deckbandaußenkante 63 hinaus erstrecken. Zur Bildung eines großflächigen Kontaktbereiches bei einer relativen Axialverschiebung des Rotors zum Stator können, wie an der Außenplattform 20 der hinteren Laufschaufelreihe 6 skizziert, entsprechende Anstreifbereiche 64 vorgesehen sein. Bevorzugterweise erstrecken sich die Anstreifbereiche 64 als radiale Vorsprünge von den Plattformaußenflächen 36 und bilden dabei mit Plattformvorderkanten 66 bzw. hinteren Außenplattformkanten der Laufschaufeln eine bündige Anstreiffläche 68.

Neben der im vorstehenden erläuterten hinteren radial inneren und äußeren Anordnung der erfindungsgemäßen Ringraumdichtung, kann diese wie in Figur 1 gezeigt alternativ oder zusätzlich auch an vorderen Deckbandinnenkanten 70 und Deckbandaußenkanten 72 positioniert sein. Die Geometrie und Ausrichtung deren plattenförmigen Federelemente 44a, 44b, 62 ist, wie in Figur 3 anhand der vorderen Federelemente 44a, 44b skizziert, entsprechend den hinteren Federelementen 42a, 42b, 60 in Radialrichtung und in Strömungsrichtung eines Hauptstroms über die Deckbandflächen 22, 30 hinaus. Analog zu den hinteren Anstreifbereichen 58, 64 weist die vordere Laufschaufelreihe entsprechende nicht skizzierte Anstreifbereiche auf. Zusätzlich zu einer vorderen inneren und äußeren Kavitätenüberdeckung ist der Rotor somit auch bei einer relativen axialen Gegenbewegung vor Beschädigungen geschützt.

Offenbart ist eine Strömungsmaschine mit einer Ringraumabdichtung zum zumindest Reduzieren eines Fluidaustausches zwischen einem von einem Hauptstrom durchströmten Ringraums und zumindest einer zum Ringraum radial innen- und/oder radial außenliegenden Kavität, wobei die Ringraumabdichtung eine Vielzahl von plattenartigen Federelementen hat, die in Radialrichtung der Strömungsmaschine und in Strömungsrichtung eine die jeweilige Leitschaufelreihe durchströmten Hauptstroms orientiert sind und hierdurch neben einer verbesserten Kavitätenüberdeckung gleichzeitig als Schutzeinrichtung für den Rotor und/oder Stator bei einer relativen Axialverschiebung zum Stator wirkt.

### Bezugszeichenliste

- 1: Strömungsmaschine
- 2: Leitschaufelreihe
- 4: Laufschaufelreihe
- 8: Schaufelblätter
- 10: Schaufelblätter
- 12: Ringraum
- 14: Innendeckband
- 16: Außendeckband
- 18: Innenplattform
- 20: Außenplattform
- 22: Deckbandinnenfläche
- 24: Deckbandinnenfläche
- 26: Plattforminnenfläche
- 28: Plattforminnenfläche
- 30: Deckbandaußenfläche
- 32: Deckbandaußenfläche
- 34: Plattformaußenfläche
- 36: Plattformaußenfläche
- 38: Innenkavität
- 40: Außenkavität
- 42a, b: vordere Federelement
- 48: Deckbandkante
- 49: plattenförmiger Wirkabschnitt
- 50: Kanal
- 52: Hauptstrom über Deckbandinnenfläche
- 54: Halteabschnitt
- 56: Vertiefung
- 57: Befestigungsbereich
- 58: Anstreifbereich
- 60: Federelement
- 62: Federelement
- 63: Deckbandkante / Deckbandaußenkante
- 64: Anstreifbereich
- 66: Plattformkante / Außenplattformkante
- 68: Anstreiffläche
- 70: Deckbandkante / Deckbandinnenkante
- 72: Deckbandkante / Deckbandaußenkante

- a: Axialspalt
- b: Spalt

## Patentansprüche

1. Strömungsmaschine (1), mit einer Ringraumabdichtung zum zumindest Reduzieren eines Fluidaustauschs zwischen einem von einem Hauptstrom (52) durchströmten Ringraum (12) und zumindest einer zum Ringraum (12) radial innen- und/oder radial außenliegenden Kavität (38, 40), wobei die Ringraumabdichtung eine Vielzahl von plattenartigen Federelementen (42a, 42b, 44a, 44b, 60, 62) hat, **dadurch gekennzeichnet, dass** sich die Federelemente (42a, 42b, 44a, 44b, 60, 62) in Axialrichtung der Strömungsmaschine über Deckbandkanten (48, 63, 70, 72) einer Leitschaufelreihe (2), an welcher sie angeordnet sind, erstrecken, wobei sie in Radialrichtung der Strömungsmaschine (1) und an ihren jeweiligen Orten in Strömungsrichtung des die jeweilige Leitschaufelreihe (2) durchströmenden Hauptstroms (52) orientiert sind, so dass sie in Axialrichtung der Strömungsmaschine (1) eine angestellte Orientierung aufweisen.

2. Strömungsmaschine nach Anspruch 1, wobei die Federelemente (42a, 42b, 44a, 44b, 60, 62) in Umfangsrichtung der Strömungsmaschine über die Leitschaufelreihe (2) gleichmäßig voneinander beabstandet sind.

3. Strömungsmaschine nach Anspruch 1 oder 2, wobei die Federelemente (42a, 42b, 44a, 44b, 60, 62) in Radialrichtung bündig mit jeweils einer den Ringraum (12) radial begrenzenden Deckbandinnenseite (22, 24) abschließen.

4. Strömungsmaschine nach Anspruch 1, 2 oder 3, wobei die Federelemente (42a, 42b, 44a, 44b, 60, 62) in Radialrichtung bündig mit jeweils einer der Kavität (38, 40) begrenzenden Deckbandaußenseite (30, 32) abschließen.

5. Strömungsmaschine nach einem der vorhergehenden Ansprüche, wobei die Federelemente (42a, 42b, 44a, 44b, 60, 62) mit jeweils einem Halteabschnitt (54) in eine korrespondierende Vertiefung (56) der Deckbänder (14, 16) eingesetzt sind.

6. Strömungsmaschine nach Anspruch 5, wobei die Federelemente (42a, 42b, 44a, 44b, 60, 62) mit ihren Wirkabschnitten (49) spaltlos mit den Deckbändern (14, 16) abschließen.

7. Strömungsmaschine nach Anspruch 5, wobei die Federelemente (42a, 42b, 44a, 44b, 60, 62) mit ihren Wirkabschnitten (49) über jeweils einen Spalt (b) von den Deckbändern (14, 16) beabstandet sind.

8. Strömungsmaschine nach einem der vorhergehenden Ansprüche, wobei die Federelemente (42a, 42b, 44a, 44b, 60, 62) an vorderen und hinteren Deckbandkanten (48, 63, 70, 72) einer Leitschaufelreihe (2) angeordnet sind.

9. Strömungsmaschine nach einem der vorhergehenden Ansprüche wobei die den Federelementen (42a, 42b, 44a, 44b) gegenüberliegenden Laufschaufeln Anstreifbereiche (58) zum Anstreifen der Federelemente (42a, 42b, 44a, 44b) haben, die jeweils in einem Übergangsbereich zwischen einer Innenplattform (18) und einem Schaufelblatt (10) angeordnet sind.

10. Strömungsmaschine nach einem der vorhergehenden Ansprüche, wobei die den Federelementen (60, 62) gegenüberliegenden Laufschaufeln Anstreifbereiche (64) zum Anstreifen der Federelemente (60, 62) haben, die jeweils als radiale stegartige Vorsprünge einer Außenplattformkante (66) ausgebildet sind.

## Claims

1. Turbomachine (1) comprising an annular space seal for at least reducing a fluid exchange between an annular space (12), which Is passed through by a main flow (52), and at least one cavity (38, 40) positioned radially inwards and/or radially outwards from the annular space (12), wherein the annular space seal has a plurality of plate-shaped spring elements (42a, 42b, 44a, 44b, 60, 62), **characterized in that** the spring elements (42a, 42b, 44a, 44b, 60,62) extend in the axial direction of the turbomachine over shroud edges (48, 63, 70, 72) of a stationary blade row (2), on which they are positioned, wherein they are oriented in the radial direction of the turbomachine (1) and at their respective locations in the flow direction of the main flow (52) which passes through the respective stationary blade row (2), such that they display an angled orientation in the axial direction of the turbomachine (1).

2. Turbomachine according to Claim 1, wherein the spring elements (42a, 42b, 44a, 44b, 60,62) are uniformly spaced apart from each other in the circumferential direction of the turbomachine over the stationary blade row (2).

3. Turbomachine according to Claim 1 or 2, wherein the spring elements (42a, 42b, 44a, 44b, 60, 62) end flush in the radial direction with a respective Inside of a shroud (22, 24) radially limiting the annular space (12).

4. Turbomachine according to Claim 1, 2 or 3, wherein the spring elements (42a, 42b, 44a, 44b, 60, 62) end flush in the radial direction with a respective outside of a shroud (30, 32) limiting the cavity (38, 40).

5. Turbomachine according to any one of the preceding claims, wherein the spring elements (42a, 42b, 44a, 44b, 60, 62) are respectively inserted with a respective retaining portion (54) into a corresponding recess (56) of the shrouds (14, 16).

6. Turbomachine according to Claim 5, wherein the spring elements (42a, 42b, 44a, 44b, 60, 62) with their effective portions (49) end, gapless, with the shrouds (14,16).

7. Turbomachine according to Claim 5, wherein the spring elements (42a, 42b, 44a, 44b, 60,62) with their effective portions (49) are spaced apart from the shrouds (14, 16) by a respective gap (b).

8. Turbomachine according to any one of the preceding claims, wherein the spring elements (42a, 42b, 44a, 44b, 60, 62) are positioned at the front and back shroud edges (48, 63, 70, 72) of a stationary blade row (2).

9. Turbomachine according to any one of the preceding claims, wherein the rotor blades have, facing the spring elements (42a, 42b, 44a, 44b), rubbing sections (58) for rubbing the spring elements (42a, 42b, 44a, 44b), which are respectively mounted in a transition area between an inner platform (18) and a turbine blade (10).

10. Turbomachine according to any one of the preceding claims, wherein the rotor blades have, facing the spring elements (60, 62), rubbing sections (64) for rubbing the spring elements (60, 62) which are formed as respectively radial ridge-like projections of an outer platform edge (66).

## Revendications

1. Turbomachine (1) comportant un joint d'étanchéité d'un espace annulaire pour au moins réduire un échange de fluides entre un espace annulaire (12) parcouru par un courant principal (52) et au moins une cavité (38, 40) radialement intérieure et/ou radialement extérieure à l'espace annulaire (12), dans laquelle le joint d'étanchéité de l'espace annulaire a une multiplicité d'éléments à ressort sous forme de plaque (42a, 42b, 44a, 44b, 60, 62), **caractérisée en ce que** les éléments à ressort (42a, 42b, 44a, 44b, 60, 62) s'étendent en direction axiale de la turbomachine sur des bords de bande de recouvrement (48, 3, 70, 72) d'une série d'aubes directrices (2), sur lesquels elles sont disposées, dans laquelle elles sont orientées dans une direction radiale de la turbomachine (1) et sur leur emplacement respectif dans une direction d'écoulement du courant principal (52) parcourant la série d'aubes directrices respective (2), de sorte qu'elles présentent en direction axiale de la turbomachine (1) une orientation effectuée.

2. Turbomachine selon la revendication 1, dans laquelle les éléments à ressort (42a, 42b, 44a, 44b, 60, 62) sont espacés à égale distance les uns des autres dans une direction périphérique de la turbomachine sur la série d'aubes directrices.

3. Turbomachine selon la revendication 1 ou 2, dans laquelle les éléments à ressort (42a, 42b, 44a, 44b, 60, 62) se terminent de niveau en direction radiale avec respectivement l'un des côtés intérieurs (12) de bande de recouvrement (22, 24) limitant radialement l'espace annulaire.

4. Turbomachine selon la revendication 1, 2 ou 3, dans laquelle les éléments à ressort (42a, 42b, 44a, 44b, 60, 62) se terminent de niveau en direction radiale avec respectivement l'un des côtés intérieurs de bande de recouvrement (30, 32) limitant la cavité (38, 40).

5. Turbomachine selon l'une des revendications précédentes, dans laquelle les éléments à ressort (42a, 42b, 44a, 44b, 60, 62) avec respectivement une section de retenue (54) sont insérés dans un creux correspondant (56) des bandes de recouvrement (14, 16).

6. Turbomachine selon la revendication 5, dans laquelle les éléments à ressort (42a, 42b, 44a, 44b, 60, 62) avec leurs sections opérationnelles (49) se terminent sans intervalle avec les bandes de recouvrement (14, 16).

7. Turbomachine selon la revendication 5, dans laquelle les éléments à ressort (42a, 42b, 44a, 44b, 60, 62) avec leurs sections opérationnelles (49) sont espacés sur un intervalle respectif (b) des bandes de recouvrement (14, 16).

8. Turbomachine selon l'une des revendications précédentes, dans laquelle les éléments à ressort (42a, 42b, 44a, 44b, 60, 62) sont disposés sur des bords avant et arrière de la bande de recouvrement (48, 63, 70, 72) d'une série d'aubes directrices (2).

9. Turbomachine selon l'une des revendications précédentes, dans laquelle les aubes mobiles opposées aux éléments à ressort (42a, 42b, 44a, 44b) ont des zones de raclage (58) pour racler les éléments à ressort (42a, 42b, 44a, 44b), qui sont disposées respectivement dans une zone de transition entre une plate-forme intérieure (18) et une pale (10).

10. Turbomachine selon l'une des revendications précédentes, dans laquelle les aubes mobiles opposées aux éléments à ressort (60, 62) ont des zones de raclage (64) pour racler les éléments ressort (60,62), qui sont conçues respectivement comme des proéminences radiales de type traverse d'un bord de plateforme extérieur (66).
